# EUROPEAN PATENT SPECIFICATION

(11) **EP 3 438 413 B1**
(45) Date of publication and mention of the grant of the patent: **01.07.2020**
(21) Application number: 18173660.4
(22) Date of filing: 22.05.2018
(51) Int. Cl.: F01D 5/20, F01D 11/00, F01D 11/08, F01D 11/12, F16J 15/44

(54) **REMOVABLY ATTACHED AIR SEAL FOR ROTATIONAL EQUIPMENT**
LÖSBAR BEFESTIGTE LUFTDICHTUNG FÜR ROTIERENDE AUSRÜSTUNG
JOINT À AIR FIXÉ DE MANIÈRE AMOVIBLE POUR ÉQUIPEMENT ROTATIF

(30) Priority: 31.07.2017 US 201715664355
(43) Date of publication of application: 06.02.2019
(73) Proprietor: United Technologies Corporation, Farmington, CT 06032 (US)
(72) Inventor: CORCORAN, Christopher, Manchester, CT Connecticut 06042 (US); OREN, Nicholas W., Marlborough, CT Connecticut 06447 (US); HAZZARD, Robert L., Windsor, CT Connecticut 06095 (US)
(74) Representative: Dehns

(56) References cited:
- EP-A1- 3 190 266
- US-A1- 2007 297 897
- US-A1- 2008 044 284
- US-A1- 2013 323 029

## Description

### BACKGROUND

### 1. Technical Field

This disclosure relates generally to rotational equipment and, more particularly, to an air seal for sealing a gap within the rotational equipment.

### 2. Background Information

Rotational equipment such as a gas turbine engine may include an air seal to seal a gap between a rotor and a stationary structure. Such an air seal may include one or more knife edge seals. Various such air seal configurations and mounting schemes therefor are known in the art. While these known air seals have various advantageous, there is still room in the art for improvement.

US 2013/323029 A1 discloses a prior art assembly according to the preamble of claim 1.

US 2007/297897 A1, EP 3 190 266 A1 and US 2008/044284 A1 disclose other prior art arrangements.

### SUMMARY OF THE DISCLOSURE

According to an aspect of the present disclosure, an assembly is provided as set forth in claim 1.

The annular air seal may be configured as or otherwise include a knife edge seal element. The annular seal land may be configured as or otherwise include an abradable seal land.

The annular air seal may further include a second knife edge seal element. This annular air seal may only include the first and second knife edge seal elements, or may also include one or more additional knife edge seal elements.

The annular air seal may include a seal element and a mount. The seal element may project radially out from the mount to a tip that sealingly engages the annular seal land. The mount may be nested with the annular arm.

The mount may be nested within the annular arm.

The annular arm may be nested within the mount.

The seal element may be configured as or otherwise include a knife edge seal element.

The seal element may be substantially perpendicular to the mount.

The seal element may be offset from the base by an acute angle and projects axially out from the mount and towards the rotor disk.

The seal element may be offset from the base by an obtuse angle and projects axially out from the mount and away from the rotor disk.

The annular air seal may be removably attached to the annular arm by at least an interference connection.

The annular air seal may be removably attached to the annular arm by at least a snap connection.

The assembly may also include a plurality of rotor blades arranged circumferentially around and connected to the rotor disk.

The rotor disk may include a rim, a hub and a web extending radially between and connected to the rim and the hub. The annular arm is connected to and projects out from the web.

The annular arm may be formed integral with at least the rotor disk as a monolithic body.

The assembly may also include a turbine engine rotor that includes the rotor disk, the annular arm and the annular air seal.

The foregoing features and the operation of the invention will become more apparent in light of the following description and the accompanying drawings.

### BRIEF DESCRIPTION OF THE DRAWINGS

FIG. 1 is a partial side sectional schematic illustration of an assembly for rotational equipment.
FIG. 2 is a partial side sectional illustration of a portion of a rotor.
FIG. 3 is a partial side sectional illustration of a portion of a rotor disk and a support arm.
FIG. 4 is a partial side sectional illustration of an air seal.
FIG. 5 is a partial side sectional illustration of an alternative rotor assembly.
FIG. 6 is a partial side sectional illustration of another air seal.
FIG. 7 is a partial side sectional illustration of another air seal.
FIG. 8 is a partial side sectional illustration of still another air seal.
FIG. 9 is a partial side sectional schematic illustration of another assembly for the rotational equipment.
FIG. 10 is a side cutaway illustration of a geared gas turbine turbofan engine.

### DESCRIPTION OF THE INVENTION

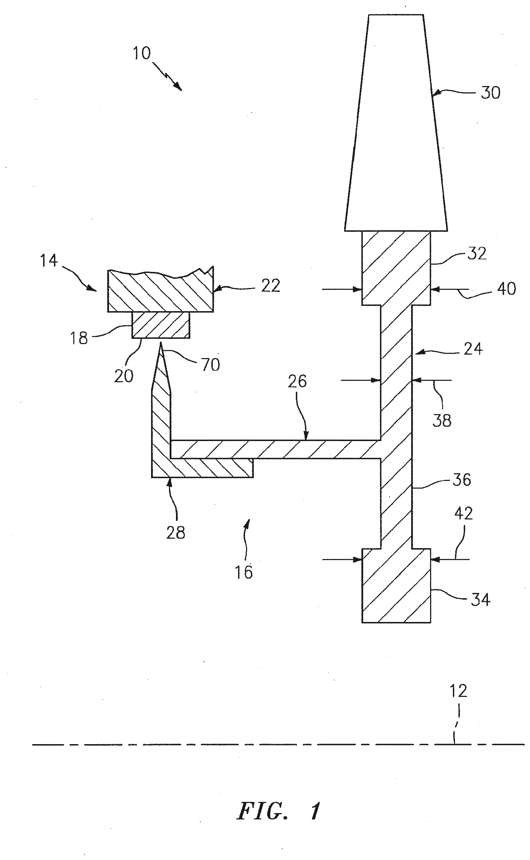

FIG. 1 is a schematic illustration of an assembly 10 for rotational equipment (in this case a gas turbine engine) with a rotational axis 12. An example of such rotational equipment is a gas turbine engine for an aircraft propulsion system, an exemplary embodiment of which is described below in further detail. However, the assembly 10 of the present disclosure is not limited to such an aircraft or gas turbine engine application. The assembly 10, for example, may alternatively be configured with rotational equipment such as an industrial gas turbine engine in which a seal is provided between a stationary structure and a rotor.

The assembly 10 of FIG. 1 includes a stationary structure 14 and a rotor 16.

The stationary structure 14 includes an annular seal land 18. The seal land 18 of FIG. 1 is configured as an abradable seal land. This seal land 18, for example, has an annular body constructed from abradable material such as, but not limited to, honeycomb material. The seal land 18 includes an inner radial seal land surface 20, which extends axially along and circumferentially around the axis 12. The seal land 18 of FIG. 1 is configured to mount to (e.g., and be positioned within) another component 22 of the stationary structure 14. Examples of such a component 22 include, but are not limited to, an annular strut and an array of stator vanes.

The rotor 16 includes a rotor disk 24, an annular arm 26 and an annular air seal 28. The rotor 16 may also include a plurality of rotor blades 30 (e.g., fan blades, compressor blades, turbine blades) as shown in FIG. 1.

The rotor disk 24 of FIG. 1 is configured as an annular rotor disk rotatable about the axis 12. This rotor disk 24 includes a rim 32, a hub 34 and a web 36.

The rim 32 extends circumferentially around the axis 12 and is configured to mount the rotor blades 30 to the rotor disk 24. For example, the rim 32 may include a plurality of slots (not shown), where each slot receives a root of a respective one of the rotor blades 30. Of course, other schemes may also or alternatively be used to removably mount the rotor blades 30 to the rim 32. In another example, the rotor blades 30 may be fixedly bonded (e.g., welded) or otherwise integrally connected with the rim 32 where, for example, the rotor disk 24 is configured with the rotor blades 30 as an integrally bladed rotor disk; e.g., a BLISK.

The hub 34 extends circumferentially around the axis 12.

The web 36 extends circumferentially around the axis 12 and extends radially out from the hub 34 to the rim 32. The web 36 thereby connects the hub 34 to the rim 32. In the exemplary embodiment shown in FIG. 1, the web 36 has an axial thickness 38 that is less than an axial thickness 40 of the rim 32 and an axial thickness 42 of the hub 34. However, the present disclosure is not limited to such an exemplary configuration.

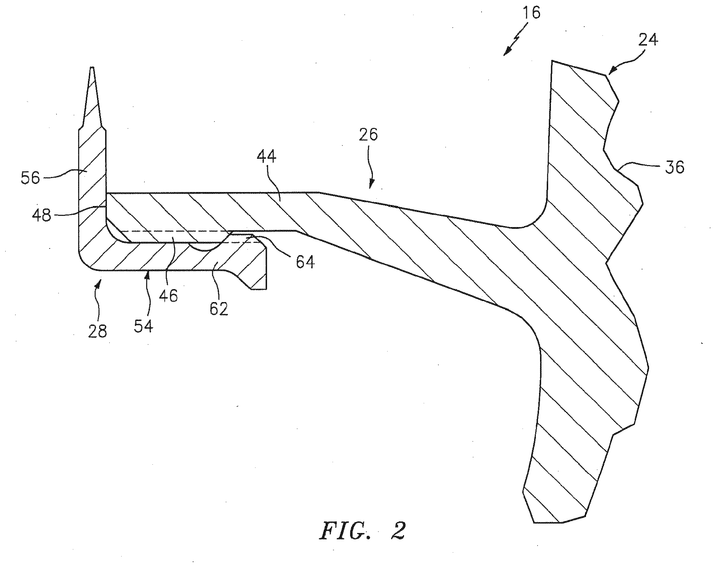

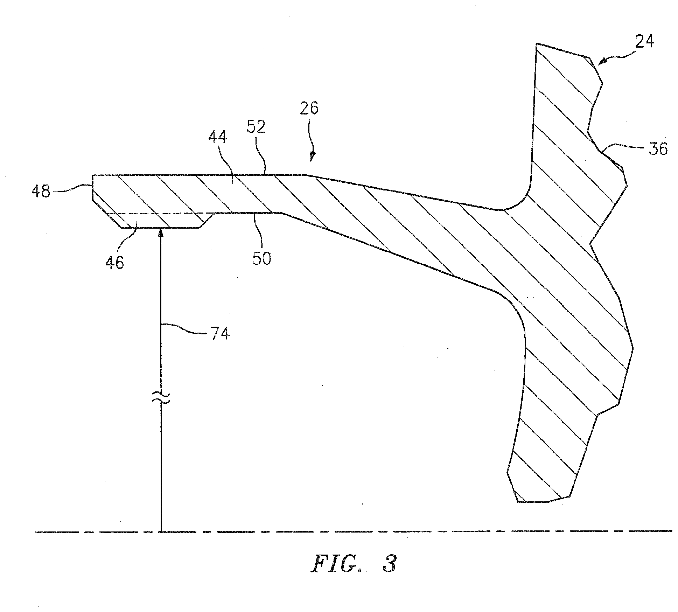

Referring to FIG. 2, the arm 26 is configured as a support arm for the air seal 28. Referring now to FIG. 3, the arm 26 is connected to the rotor disk 24 and, more particularly, the web 36 in this specific exemplary embodiment. The arm 26 of FIG. 3, for example, is formed integral with at least the rotor disk 24 as a single monolithic body. However, in other embodiments, the arm 26 may be mechanically fastened, welded, brazed, adhered and/or otherwise fixedly attached to the web 36 or another portion of the rotor disk 24. The arm 26 of FIG. 3 includes a generally tubular arm base 44 and an arm rim 46.

The arm base 44 of FIG. 3 projects axially (e.g., and slightly radially) out from the web 36 to an axial distal arm end 48 of the arm 26. The arm base 44 and, thus, the arm 26 thereby are cantilevered from the rotor disk 24; e.g., only supported at one end. The arm base 44 extends radially between opposing radial inner and outer surfaces 50 and 52 of the arm 26.

The arm rim 46 of FIG. 3 is arranged radially within the arm base 44 at (e.g., on, adjacent or proximate) the distal arm end 48. The arm rim 46, for example, projects radially out from the arm base 44 in a radially inward direction. The arm rim 46 may be configured as a full hoop portion of the arm 26. Alternatively, the arm rim 46 may be configured from a plurality of discrete segments arranged circumferentially around the axis 12 in an annular array.

Referring to FIG. 1, the air seal 28 is configured to substantially seal a gap between the arm 26 and the seal land 18. The air seal 28 is also configured for removable attachment to the arm 26. The air seal 28 of FIG. 2, for example, includes a tubular mount 54 and an annular seal element 56.

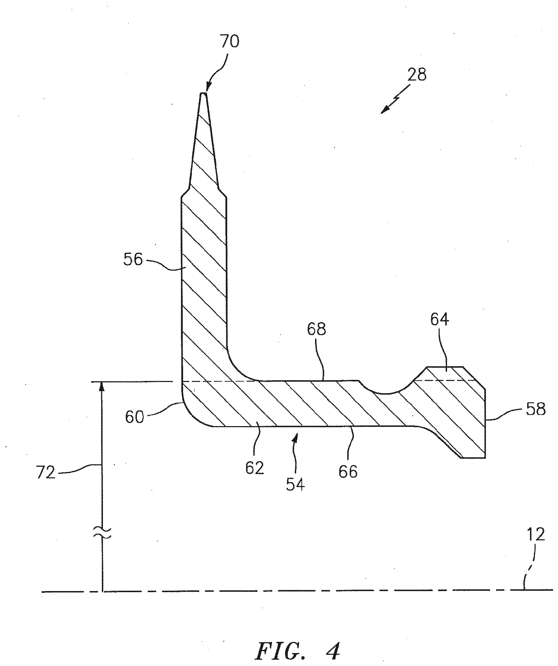

Referring to FIG. 4, the mount 54 extends circumferentially around the axis 12. The mount 54 extends axially along the axis 12 between axially opposing first and second distal ends 58 and 60 of the air seal 28. The mount 54 includes a mount base 62 and a mount rim 64.

The mount base 62 extends axially along a length of the mount 54. The mount base 62 extends radially between opposing radial inner and outer surfaces 66 and 68 of the mount 54.

The mount rim 64 of FIG. 4 circumscribes the mount base 62 at (e.g., on, adjacent or proximate) the first distal end 58. The mount rim 64, for example, projects radially out from the mount base 62 in a radially outward direction. The mount rim 64 may be configured as a full hoop portion of the mount 54. Alternatively, the mount rim 64 may be configured from a plurality of discrete segments arranged circumferentially around the axis 12 in an annular array.

The seal element 56 of FIG. 4 is configured as a knife edge seal element. The seal element 56, for example, projects radially out from the mount 54 to a tapered tip 70, which tip 70 is configured to sealingly engage the seal land 18 as shown in FIG. 1. The seal element 56 of FIG. 4 is connected to the mount base 62, and is positioned at (e.g., on, adjacent or proximate) the second distal end 60 of the air seal 28. With this exemplary configuration, the mount 54 and the seal element 56 provide the air seal 28 with a generally L-shaped cross section, for example, when viewed in a radial plane that intersects and is parallel with the axis 12; e.g., the plane of FIG. 4.

Referring to FIG. 2, the mount 54 is mated with the arm 26 to removably attach the air seal 28 to the arm 26 at (e.g., on, adjacent or proximate) the distal arm end 48. More particularly, the mount base 62 is nested within the arm base 44 in such a manner that the arm rim 46 is disposed axially between the mount rim 64 and the seal element 56. The air seal 28 may thereby be attached to the arm 26 by a snap connection. In addition (or alternatively), the mount base 62 may be configured with an outer surface radius 72 (see FIG. 4) slightly larger than an inner surface radius 74 of the arm rim 46 (see FIG. 3) when the components 26 and 28 are apart such that the air seal 28 is attached to the arm 26 by an interference connection between the mount base 62 and the arm rim 46 when the components 26 and 28 are nested together. Mating of the components 26 and 28 may be facilitated by heating a first of the components (e.g., the arm 26) and/or cooling a second one of the components (e.g., the mount 54) such that the material of the first component expands and the material of the second component contracts enabling the mount 54 to be nested within the arm 26.

The foregoing attachment between the air seal 28 and the arm 26 is termed "removable" because the components 26 and 28 can be disassembled without destroying or otherwise permanently altering either of the components 26, 28. For example, the disassembly of the components 26 and 28 may be facilitated by heating a first of the components (e.g., the arm 26) and/or cooling a second one of the components (e.g., the mount 54) such that the material of the first component expands and the material of the second component contracts enabling the mount 54 to be slid out from a bore of the arm 26. This ability to non-destructively remove the air seal 28 from the arm 26 enables the air seal 28 to be relatively quickly replaced during rotational equipment maintenance and/or repair. By contrast, if the air seal 28 was permanently attached to (e.g., integral with or welded to) the rotor disk 24, the entire rotor disk / air seal assembly may need to be replaced or repaired outside of the rotational equipment leading to longer and costlier rotational equipment downtime.

Of course, in other embodiments, the removable air seal 28 may be destroyed during removal. Such destruction, however, may be a byproduct of the air seal 28 already being damaged and/or worn. Even when the removable air seal 28 is destroyed, however, the arm 26 may be configured to receive a replacement air seal 28 without further preparation (e.g., machining surfaces, etc.).

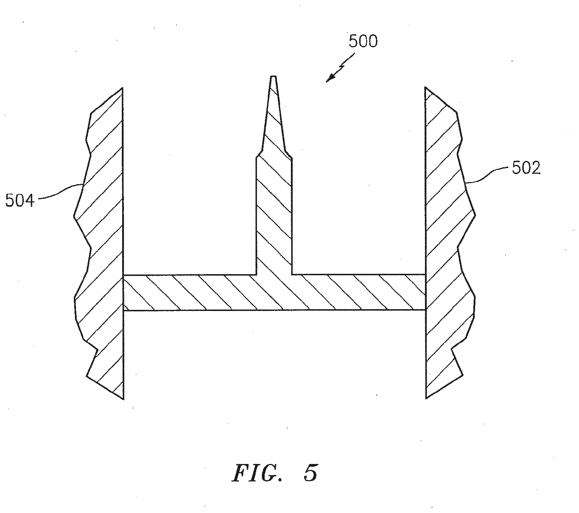

The air seal 28 of FIG. 2 is completely supported by the arm 26. No other structures are directly connected to and support the air seal 28. Rather, the air seal 28 of FIG. 2 may be cantilevered from the arm 26 at the distal arm end 48; e.g., only supported at one end. By contrast, a seal device 500 as shown in FIG. 5, which falls outside the scope of the claims, extends between, is connected to and thereby is supported by at least two other structures 502 and 504; e.g., adjacent rotor disks.

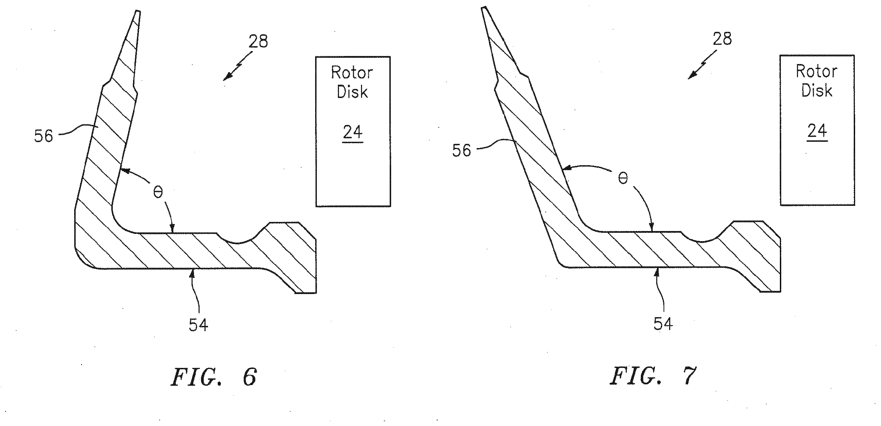

Referring to FIG. 4, in some embodiments, the seal element 56 may be substantially perpendicular to the mount 54. In other embodiments, however, the seal element 56 may be angularly offset from the mount 54 by an acute or obtuse angle θ as shown in FIGS. 6 and 7. In the embodiment of FIG. 6, the seal element 56 projects axially out from the mount 54 in a direction towards the rotor disk 24 (shown in block form). In the embodiment of FIG. 7, the seal element 56 projects axially out from the mount 54 in a direction away from the rotor disk 24 (shown in block form).

In some embodiments, referring to FIG. 1, the tip 70 of the seal element 56 may be coated with, for example, a hard coating. Such a coating may reduce likelihood of tip 70 wear when the seal element 56 comes into contact with the seal land 18 and, more particularly, the surface 20.

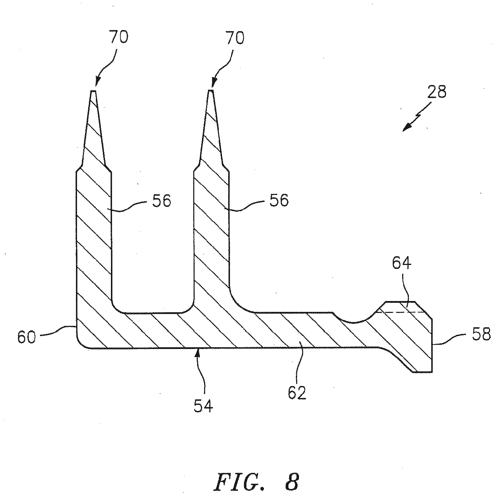

In some embodiments, referring to FIG. 8, the air seal 28 may be configured with two or more seal elements 56; e.g., knife edge seal elements.

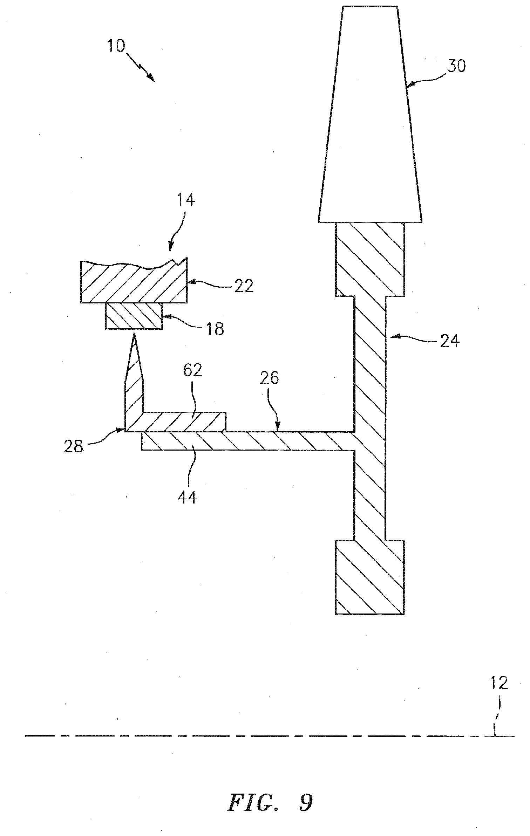

In some embodiments, referring to FIG. 9, the arm base 44 may be nested within the mount base 62 to removably attached the air seal 28 to the support arm 26. In a similar manner as described above, the air seal 28 may be attached to the arm 26 by a snap connection. In addition or alternatively, the air seal 28 may be attached to the arm 26 by an interference connection.

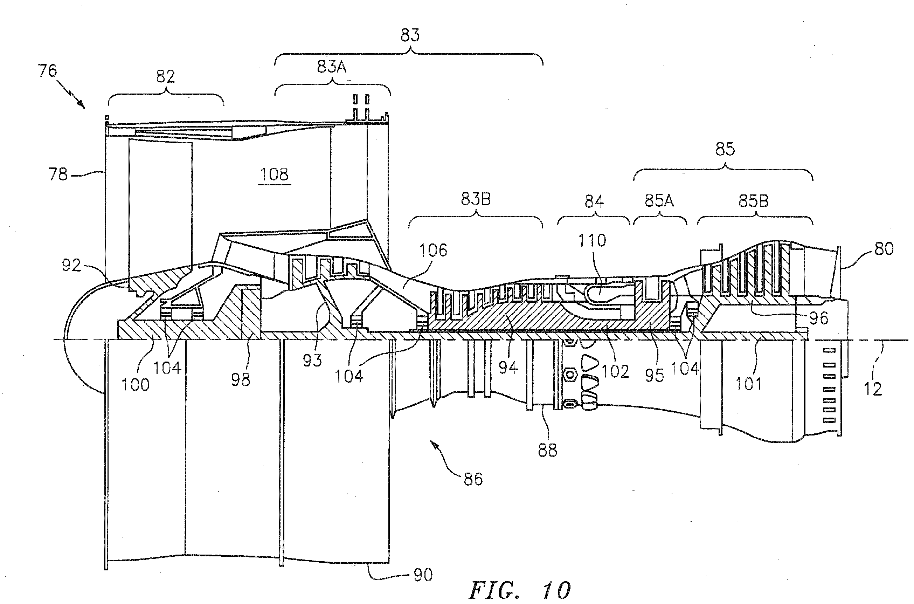

As described above, the assembly 10 of the present disclosure may be configured with various different types and configurations of rotational equipment. FIG. 10 illustrates one such type and configuration of the rotational equipment - a geared turbofan gas turbine engine 76. Such a turbine engine 76 includes various stationary structures (e.g., bearing supports, hubs, cases, etc.) as well as various rotors (e.g., rotor disks, shafts, shaft assemblies, etc.) as described below, where the stationary structure 14 and the rotor 16 can respectively be configured as anyone of the foregoing structures in the turbine engine 76 of FIG. 10, or other structures not mentioned herein.

The turbine engine 76 of FIG. 10 extends along a centerline (e.g., the axis 12) between an upstream airflow inlet 78 and a downstream airflow exhaust 80. The turbine engine 76 includes a fan section 82, a compressor section 83, a combustor section 84 and a turbine section 85. The compressor section 83 includes a low pressure compressor (LPC) section 83A and a high pressure compressor (HPC) section 83B. The turbine section 85 includes a high pressure turbine (HPT) section 85A and a low pressure turbine (LPT) section 85B.

The engine sections 82-85 are arranged sequentially along the axis 12 within an engine housing 86. This housing 86 includes an inner case 88 (e.g., a core case) and an outer case 90 (e.g., a fan case). The inner case 88 may house one or more of the engine sections 83-85; e.g., an engine core. The outer case 90 may house at least the fan section 82.

Each of the engine sections 82, 83A, 83B, 85A and 85B includes a respective rotor 92-96. Each of these rotors 92-96 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 92 is connected to a gear train 98, for example, through a fan shaft 100. The gear train 98 and the LPC rotor 93 are connected to and driven by the LPT rotor 96 through a low speed shaft 101. The HPC rotor 94 is connected to and driven by the HPT rotor 95 through a high speed shaft 102. The shafts 100-102 are rotatably supported by a plurality of bearings 104. Each of these bearings 104 is connected to the engine housing 86 by at least one stationary structure such as, for example, an annular support strut.

During operation, air enters the turbine engine 76 through the airflow inlet 78. This air is directed through the fan section 82 and into a core gas path 106 and a bypass gas path 108. The core gas path 106 extends sequentially through the engine sections 83A, 83B, 84, 85A and 85B; e.g., an engine core. The air within the core gas path 106 may be referred to as "core air". The bypass gas path 108 extends through a bypass duct, which bypasses the engine core. The air within the bypass gas path 108 may be referred to as "bypass air".

The core air is compressed by the compressor rotors 93 and 94 and directed into a combustion chamber 110 of a combustor in the combustor section 84. Fuel is injected into the combustion chamber 110 and mixed with the compressed core air to provide a fuel-air mixture. This fuel air mixture is ignited and combustion products thereof flow through and sequentially cause the turbine rotors 95 and 96 to rotate. The rotation of the turbine rotors 95 and 96 respectively drive rotation of the compressor rotors 94 and 93 and, thus, compression of the air received from a core airflow inlet. The rotation of the turbine rotor 96 also drives rotation of the fan rotor 92, which propels bypass air through and out of the bypass gas path 108. The propulsion of the bypass air may account for a majority of thrust generated by the turbine engine 76, e.g., more than seventy-five percent (75%) of engine thrust. The turbine engine 76 of the present disclosure, however, is not limited to the foregoing exemplary thrust ratio.

The assembly 10 may be included in various aircraft and industrial turbine engines other than the one described above as well as in other types of rotational equipment; e.g., wind turbines, water turbines, rotary engines, etc. The assembly 10, for example, may be included in a geared turbine engine where a gear train connects one or more shafts to one or more rotors in a fan section, a compressor section and/or any other engine section. Alternatively, the assembly 10 may be included in a turbine engine configured without a gear train. The assembly 10 may be included in a geared or non-geared turbine engine configured with a single spool, with two spools (e.g., see FIG. 10), or with more than two spools. The turbine engine may be configured as a turbofan engine, a turbojet engine, a propfan engine, a pusher fan engine or any other type of turbine engine. The present invention therefore is not limited to any particular types or configurations of turbine engines or rotational equipment.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly (10) for a gas turbine engine, comprising:
a rotor disk (24) rotatable about an axis (12);
an annular arm (26) connected to the rotor disk (24), the annular arm (26) projecting axially out from the rotor disk (24) to a distal arm end (48);
an annual air seal (28); and
an annular seal land (18) sealingly engaged with the annular air seal (28);
**characterised in that**:
the annular air seal (28) is removably attached to and completely supported by the annular arm (26) at the distal arm end (48) such that the annular air seal (28) is not directly connected to or supported by any other structure.

2. The assembly (10) of claim 1, wherein
the annular air seal (26) comprises a knife edge seal element (56); and
the annular seal land (18) comprises an abradable seal land.

3. The assembly (10) of claim 2, wherein the annular air seal (26) further comprises a second knife edge seal element (56).

4. The assembly (10) of claim 1, wherein
the annular air seal (26) includes a seal element (56) and a mount (54);
the seal element (56) projects radially out from the mount (54) to a tip (70) that sealingly engages the annular seal land (18); and
the mount (54) is nested with the annular arm (26).

5. The assembly (10) of claim 4, wherein the mount (54) is nested within the annular arm (26), or the annular arm (26) is nested within the mount (54).

6. The assembly (10) of claim 4 or 5, wherein the seal element (56) comprises a knife edge seal element.

7. The assembly (10) of claim 4, 5 or 6, wherein the seal element (56) is substantially perpendicular to the mount (54).

8. The assembly (10) of claim 4, 5 or 6, wherein the seal element (56) is offset from the mount (54) by an acute angle (θ) and projects axially out from the mount (54) and towards the rotor disk (24).

9. The assembly (10) of claim 4, 5 or 6, wherein the seal element (56) is offset from the mount (54) by an obtuse angle (θ) and projects axially out from the mount (54) and away from the rotor disk (24).

10. The assembly (10) of any preceding claim, wherein the annular air seal (28) is removably attached to the annular arm (26) by at least an interference connection and/or a snap connection.

11. The assembly (10) of any preceding claim, further comprising a plurality of rotor blades (30) arranged circumferentially around and connected to the rotor disk (24).

12. The assembly (10) of any preceding claim, wherein
the rotor disk (24) includes a rim (32), a hub (34) and a web (36) extending radially between and connected to the rim (32) and the hub (34); and
the annular arm (26) is connected to and projects out from the web (36).

13. The assembly (10) of any preceding claim, wherein the annular arm (26) is formed integral with at least the rotor disk (24) as a monolithic body.

14. The assembly (10) of any preceding claim, further comprising a turbine engine rotor that includes the rotor disk (24), the annular arm (26) and the annular air seal (28).

15. The assembly (10) of any preceding claim, wherein the annular air seal (28) is removably secured to and cantilevered from the annular arm (26) at the distal arm end (48).

## Patentansprüche

1. Anordnung (10) für ein Gasturbinentriebwerk, umfassend:
eine Rotorscheibe (24), die um eine Achse (12) rotierbar ist;
einen ringförmigen Arm (26), der mit der Rotorscheibe (24) verbunden ist, wobei der ringförmige Arm (26) axial von der Rotorscheibe (24) zu einem distalen Armende (48) hervorsteht;
eine ringförmige Luftdichtung (28); und
eine ringförmige Dichtungsfläche (18), die dichtend in die ringförmige Luftdichtung (28) eingreift;
**dadurch gekennzeichnet, dass**:
die ringförmige Luftdichtung (28) an dem distalen Armende (48) lösbar an dem ringförmigen Arm (26) befestigt ist und vollständig durch diesen gestützt wird, sodass die ringförmige Luftdichtung (28) nicht direkt mit einer anderen Struktur verbunden ist oder durch diese gestützt wird.

2. Anordnung (10) nach Anspruch 1, wobei
die ringförmige Luftdichtung (26) ein Messerkantendichtungselement (56) umfasst; und
die ringförmige Dichtungsfläche (18) eine abreibbare Dichtungsfläche umfasst.

3. Anordnung (10) nach Anspruch 2, wobei die ringförmige Luftdichtung (26) ferner ein zweites Messerkantendichtungselement (56) umfasst.

4. Anordnung (10) nach Anspruch 1, wobei
die ringförmige Luftdichtung (26) ein Dichtungselement (56) und eine Halterung (54) beinhaltet;
das Dichtungselement (56) radial von der Halterung (54) zu einer Spitze (70) hervorsteht, die dichtend in die ringförmige Dichtungsfläche (18) eingreift; und
die Halterung (54) in den ringförmigen Arm (26) eingebettet ist.

5. Anordnung (10) nach Anspruch 4, wobei die Halterung (54) in den ringförmigen Arm (26) eingebettet ist oder der ringförmige Arm (26) in die Halterung (54) eingebettet ist.

6. Anordnung (10) nach Anspruch 4 oder 5, wobei das Dichtungselement (56) ein Messerkantendichtungselement umfasst.

7. Anordnung (10) nach Anspruch 4, 5 oder 6, wobei das Dichtungselement (56) im Wesentlichen senkrecht zu der Halterung (54) ist.

8. Anordnung (10) nach Anspruch 4, 5 oder 6, wobei das Dichtungselement (56) durch einen spitzen Winkel (θ) von der Halterung (54) versetzt ist und axial von der Halterung (54) und in Richtung der Rotorscheibe (24) hervorsteht.

9. Anordnung (10) nach Anspruch 4, 5 oder 6, wobei das Dichtungselement (56) durch einen stumpfen Winkel (θ) von der Halterung (54) versetzt ist und axial von der Halterung (54) und von der Rotorscheibe (24) weg hervorsteht.

10. Anordnung (10) nach einem der vorangehenden Ansprüche, wobei die ringförmige Luftdichtung (28) durch zumindest eine Klemmverbindung und/oder eine Schnappverbindung lösbar an dem ringförmigen Arm (26) befestigt ist.

11. Anordnung (10) nach einem der vorangehenden Ansprüche, ferner umfassend eine Vielzahl von Rotorblättern (30), die in Umfangsrichtung um die Rotorscheibe (24) angeordnet und mit dieser verbunden sind.

12. Anordnung (10) nach einem der vorgehenden Ansprüche, wobei
die Rotorscheibe (24) einen Rand (32), eine Nabe (34) und einen Steg (36) beinhaltet, der sich radial zwischen dem Rand (32) und der Nabe (34) erstreckt und mit diesen verbunden ist; und
der ringförmige Arm (26) mit dem Steg (36) verbunden ist und von dieser hervorsteht.

13. Anordnung (10) nach einem der vorangehenden Ansprüche, wobei der ringförmige Arm (26) einstückig mit zumindest der Rotorscheibe (24) als ein monolithischer Körper gebildet ist.

14. Anordnung (10) nach einem der vorangehenden Ansprüche, ferner umfassend einen Turbinentriebwerksrotor, der die Rotorscheibe (24), den ringförmigen Arm (26) und die ringförmige Luftdichtung (28) beinhaltet.

15. Anordnung (10) nach einem der vorangehenden Ansprüche, wobei die ringförmige Luftdichtung (28) an dem distalen Armende (48) lösbar an dem ringförmigen Arm (26) gesichert und von diesem fliegend gelagert ist.

## Revendications

1. Ensemble (10) pour un moteur à turbine à gaz, comprenant :
un disque de rotor (24) pouvant tourner autour d'un axe (12) ;
un bras annulaire (26) relié au disque de rotor (24), le bras annulaire (26) faisant saillie axialement depuis le disque de rotor (24) vers une extrémité distale de bras (48) ;
un joint à air annulaire (28) ; et
une zone d'étanchéité annulaire (18) en prise de manière étanche avec le joint à air annulaire (28) ;
**caractérisé en ce que** :
le joint à air annulaire (28) est fixé de manière amovible sur et complètement supporté par le bras annulaire (26) au niveau de l'extrémité distale de bras (48) de sorte que le joint à air annulaire (28) n'est pas directement relié à ou supporté par une autre structure.

2. Ensemble (10) selon la revendication 1, dans lequel
le joint à air annulaire (26) comprend un élément d'étanchéité à lame de couteau (56) ; et
la zone d'étanchéité annulaire (18) comprend une zone d'étanchéité abradable.

3. Ensemble (10) selon la revendication 2, dans lequel le joint à air annulaire (26) comprend en outre un second élément d'étanchéité à lame de couteau (56).

4. Ensemble (10) selon la revendication 1, dans lequel
le joint à air annulaire (26) comporte un élément d'étanchéité (56) et un support (54) ;
l'élément d'étanchéité (56) fait saillie radialement depuis le support (54) vers une pointe (70) qui vient en prise de manière étanche avec la zone d'étanchéité annulaire (18) ; et
le support (54) est emboîté avec le bras annulaire (26).

5. Ensemble (10) selon la revendication 4, dans lequel le support (54) est emboîté dans le bras annulaire (26), ou le bras annulaire (26) est emboîté dans le support (54).

6. Ensemble (10) selon la revendication 4 ou 5, dans lequel l'élément d'étanchéité (56) comprend un élément d'étanchéité à lame de couteau.

7. Ensemble (10) selon la revendication 4, 5 ou 6, dans lequel l'élément d'étanchéité (56) est sensiblement perpendiculaire au support (54).

8. Ensemble (10) selon la revendication 4, 5 ou 6, dans lequel l'élément d'étanchéité (56) est décalé du support (54) d'un angle aigu (θ) et fait saillie axialement depuis le support (54) et vers le disque de rotor (24).

9. Ensemble (10) selon la revendication 4, 5 ou 6, dans lequel l'élément d'étanchéité (56) est décalé du support (54) d'un angle obtus (θ) et fait saillie axialement depuis le support (54) et loin du disque de rotor (24).

10. Ensemble (10) selon une quelconque revendication précédente, dans lequel le joint à air annulaire (28) est fixé de manière amovible au bras annulaire (26) par au moins un raccordement d'interférence et/ou un raccordement par encliquetage.

11. Ensemble (10) selon une quelconque revendication précédente, comprenant en outre une pluralité d'aubes de rotor (30) agencées circonférentiellement autour et reliées au disque de rotor (24).

12. Ensemble (10) selon une quelconque revendication précédente, dans lequel
le disque de rotor (24) comporte un rebord (32), un moyeu (34) et une bande (36) s'étendant radialement entre et reliée au rebord (32) et au moyeu (34) ; et
le bras annulaire (26) est relié à la bande (36) et fait saillie depuis celle-ci.

13. Ensemble (10) selon une quelconque revendication précédente, dans lequel le bras annulaire (26) est formé d'un seul tenant avec au moins le disque de rotor (24) en tant que corps monolithique.

14. Ensemble (10) selon une quelconque revendication précédente, comprenant en outre un rotor de turbomachine qui comporte le disque de rotor (24), le bras annulaire (26) et le joint à air annulaire (28).

15. Ensemble (10) selon une quelconque revendication précédente, dans lequel le joint à air annulaire (28) est fixé de manière amovible et en porte-à-faux par rapport au bras annulaire (26) au niveau de l'extrémité distale de bras (48).
